(19) **Europäisches Patentamt**

**European Patent Office**

**Office européen des brevets**

(11) **EP 1 006 538 B1**

(12) **EUROPEAN PATENT SPECIFICATION**

(45) Date of publication and mention
of the grant of the patent:
**09.06.2004 Bulletin 2004/24**

(51) Int Cl.$^7$: **H01H 9/56**

(21) Application number: **98204084.2**

(22) Date of filing: **03.12.1998**

(54) **Control and monitoring device for the opening/closing of electric operating elements**

Steuer- und Überwachungseinrichtung für die Öffnung oder die Schliessung eines elektrischen
Betätigungselementes

Dispositif de contrôle et de surveillance pour l'ouverture ou la fermeture d'un élément électrique de
commande

(84) Designated Contracting States:
**AT BE CH DE DK ES FI FR GB GR IT LI NL SE**

(43) Date of publication of application:
**07.06.2000 Bulletin 2000/23**

(73) Proprietor: **ABB Research Ltd.**
**8050 Zürich (CH)**

(72) Inventors:
• **Cereda, Carlo**
**24043 Caravaggio (Bg) (IT)**

• **Borlotti, Roberto**
**24046 Bagnatica (Bg) (IT)**

(74) Representative: **Giavarini, Francesco et al**
**ZANOLI & GIAVARINI S.r.l.**
**Viale Bianca Maria, 35**
**20122 Milano (IT)**

(56) References cited:
**DE-A- 4 005 532**     **FR-A- 2 142 254**

**Description**

The present invention relates to a control and monitoring device for the opening/closing of electric operating means such as circuit-breakers, disconnectors and the like, in an electricity distribution and/or transmission network.

In particular, the present invention relates to a control and monitoring device that makes it possible to perform a predictive calculation of the moments in time at which the current or voltage of one or more of the electrical phases assume a desired value, starting from a known succession of sampled moments.

This makes it possible to execute the opening/closing operations of electric operating means at the optimal moments in which the negative effects on the system due to transients or electrical arcing phenomenon are minimised.

It is known from the state of the art that operating means such as circuit-breakers, disconnectors and the like generally operate in response to commands, either automatic or manual, sent from a control and monitoring panel. This means that the operation may take place in a "random" manner, which is to say in a manner that is asynchronous in relation to the network parameters and, very frequently, able to generate electrical transients and/or electrical arcing phenomena that are generally extremely damaging.

In order to minimise these damaging transient effects, it would be necessary to perform the electrical operation in a manner that is "synchronous" in relation to the network parameters. This means that, having fixed an optimal operating moment in relation to the type of load and the modes of connection of the latter to the network, the operating moment actually implemented falls in a synchronism time window containing the optimal moment in which the aforementioned damaging transient effects are sufficiently limited.

For example, in the case of a closing operation on a capacitive load, the optimal moment occurs when there is zero voltage. The synchronism time window is therefore determined by the interval in time when the voltage is around zero.

Determining the time window containing the moment of operation presupposes a predictive calculation of the trendof the voltage and current in each individual electrical phase and in particular the preliminary determination of the current or voltage zero moments.

The predictive calculation is performed, in a number of solutions described in the US patents US 5,118,260 and US 5,361,189, by taking a voltage reference and determining the current reference by measuring a phase angle that is subsequently considered constant. This method of determining the current references, generally the zero moments, is not effective with distorted voltages, which is to say when there are transient components and, more generally, non-symmetrical components, and it is therefore entirely inapplicable in fault conditions.

Another known solution, described in US patent US 5,566,041, limited to the opening operation and for single phase systems only, executes a predictive calculation based on the measurement of the current zero moments, assuming that the network frequency is constant and the currents symmetrical. The subsequent passage through zero is therefore predicted by adding the fixed duration of the current period to that measured.

This solution, as in the previous case, is only effective in steady state conditions and unable to handle fault conditions or, more generally, situations in which transients are present. Indeed, these situations are characterised by the presence of a unidirectional current component that involves aperiodicity or asymmetry of the current. Moreover, the aforementioned solution does not envisage any type of control during the closing operation, which is executed using an asynchronous command. Another example of known solution is given in DE-A-4005532.

The principal task of the present invention is to provide a control and monitoring device for the opening/closing of electric operating elements such as circuit breakers, disconnectors and the like that is able to perform a predictive calculation of the moments in which the current or voltage of one or more electrical phases assumes a desired value, in particular the zero and/or maximum values.

As part of this task, one object of the present invention is to provide a control and monitoring device that is able to execute a predictive calculation algorithm in steady state conditions where there is however voltage and current distortion providing it is only present periodically.

A further object of the present invention is to provide a control and monitoring device that is able to execute a predictive calculation algorithm in transient or fault conditions.

A further object of the present invention is to provide a control and monitoring device able to execute a predictive calculation algorithm that is easy to implement and requires a relatively low number of execution steps.

A further but not the last object of the present invention is to provide a control and monitoring device that is easy to realize at low cost.

This task, together with these and other objects that shall emerge more clearly hereinafter, are achieved by a control and monitoring device for actuating means for the opening/closing of operating elements, featuring a mobile contact and a fixed contact, comprising measuring means for the current and voltage of one or more electrical phases and a processing unit equipped with means performing the following functions:

- receiving in input from said measuring means signals indicating a succession of moments measured in which the voltage and/or current assumes a desired value;

- iteratively executing a calculation of the period of succession of moments measured;

- executing a predictive calculation of a succession of moments in which the current and/or voltage assumes said desired value;

- calculating, following an operating command, the time window for the opening/closing of said electric operating elements;

- sending a command to said actuator means on the basis of the time window determined and of the operating times of said electric operating elements. The device as in the invention is characterised by the fact that said processing unit:

- executes a first algorithm that carries out the calculation of the period of said succession of moments measured and obtains directly from said period a predictive calculation of a succession of moments, in which the current and/or voltage assumes said desired value, envisaging normal network operating conditions;

- executes a second algorithm that carries out the predictive calculation of a succession of moments, in which the current and/or voltage assumes said desired value, envisaging non-normal operation of the network, said second algorithm only being taken into consideration if said first algorithm supplies a value for the period that is below a given threshold.

Further characteristics and advantages of the invention shall emerge more clearly from the description of preferred but not exclusive embodiments of the control and monitoring device as in the invention, illustrated purely by way of example and without limitation in the attached drawings, in which:

Figure 1 is a diagram of a preferred but not limiting embodiment of a control and monitoring device as in the invention;

Figure 2 is a diagram of the phases of the predictive calculation of a succession of moments executed by a control and monitoring device as in the invention;

Figure 3 is a diagram of the phases of a first algorithm executed by a processing unit comprised in the control and monitoring device as in the invention.

Figure 4 is a diagram of the subsequent phases of a second algorithm executed by a processing unit comprised in the control and monitoring device as in the invention.

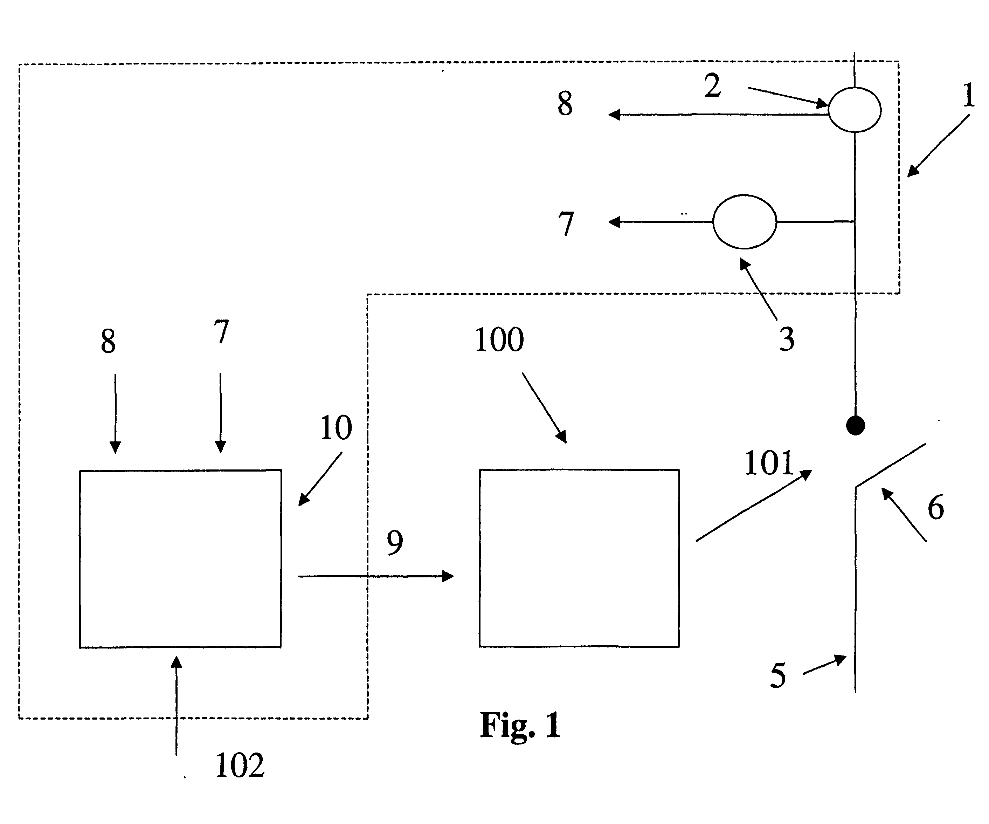

With reference to Figure 1, a preferred embodiment of the control and monitoring device as in the invention is presented in diagrammatic form.

The control and monitoring device as in the invention (shown by the broken line and by Figure 1), comprises a processing unit 10 and measuring means 2 and 3, comprising current and voltage transformers, for example. Said measuring means 2 and 3 perform a measurement of the current and voltage of the phase 5.

The measuring means 2 and 3 send the measurement signals 7 and 8 indicating the moments measured at which the current and/or voltage of the phase 5 assumes a desired value, such as the current zero value, for example.

The processing unit 10 receives in input the signals 7 and 8 and saves this succession of moments measured. The processing unit 10 executes, using a first algorithm described hereinafter, a calculation of the period of the succession, which is under all circumstances periodical, of the moments measured in which the current and/or voltage assumes a desired value.

Knowing the period of the succession of moments measured, the processing unit 10 can perform a predictive calculation of the succession of future moments in which the current and/or voltage assumes said desired value, also taking the period measured or the nominal period of the electrical network into account.

If the value of the period is higher than a given predetermined threshold, the predictive calculation of the succession of future moments can be performed by means of a simple multiplication of the value of the period by a constant.

If the value of the period is less than a given threshold then the predictive calculation of the succession of moments is performed by means of a second algorithm described hereinafter.

Following an external operating command 102 and taking the predictive calculation of the succession of future moments into account, the processing unit 10 calculates the time window for the opening or closing of the electric operating elements (shown in diagrammatic form in Figure 1 by the circuit-breaker 6).

On the basis of the calculation of the time window and on the basis of the operating times of the circuit breakers 6, the unit 10 sends a control signal 9 to the actuating means 100 required to operate (arrow 101) the circuit-breaker 6.

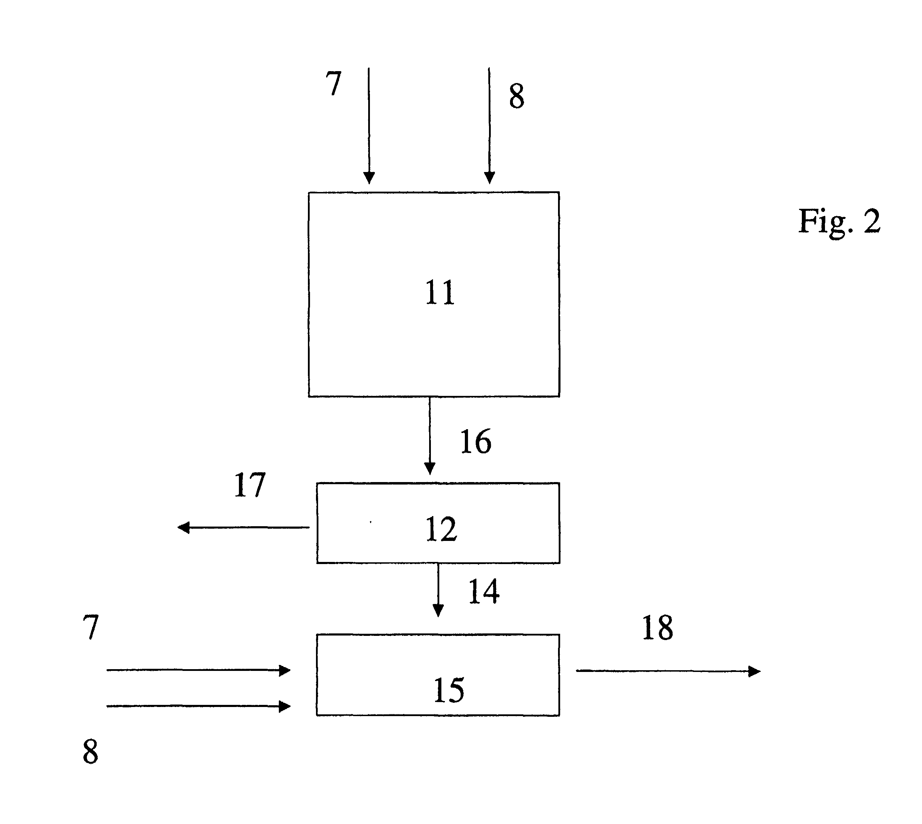

With reference to Figure 2, the structure of the predictive calculation procedure performed by the processing unit 10 comprised in the control and monitoring device as in the invention is shown in diagrammatic form.

The unit 10 executes a first algorithm, indicated by block number 11, regarding the normal operating conditions of the system. The algorithm 11, processes the values coming from the signals 7 and 8 (indicating the moments in which the current and/or voltage assumes a desired value) and supplies, at the end of its execution, a convergence value 16. Said convergence value is subsequently subjected to a check (block 12).

Block 12 considers the convergence value 16 as a network status indicator.

A convergence value 16 above a given threshold means that the system is in normal operating conditions: the electrical network is in steady state (with or without harmonic distortion) and there are no network transients or faults.

In this case the convergence value 16 is the period of the sequence of moments in which the current or voltage assumes a desired value. Thanks to it, it is easy to extrapolate, by simple multiplication, the succession (indicated by the arrow 17) of future moments at which the current or the voltage assumes the same desired value.

The future moments predicted are used by the processing unit 10 to calculate the time window used to send the opening/closing command to the operating elements.

The algorithm 11 is based on the calculation of the absolute maximum of autocorrelation of a vector that has as its elements the moments measured in which the current or voltage assumes a desired value. The algorithm 11 is executed by the processing unit 10 continually.

If the convergence value 16 is less than a given threshold then it means that the algorithm does not converge or that high transients or faults are present. This situation can also occur during the start-up of the system, immediately after an operation has been performed, for example. In these cases the network exhibits non-normal operation.

The processing unit 10 proceeds to execute a second algorithm 15 that calculates the succession of moments (arrow 18) in which the current and/or the voltage assumes said desired value, evaluating the interval of time between the moments measured by the measuring means 2 and 3, and basing itself on the measured or nominal period of the network.

The succession of moments predicted is used by the processing unit 10 to calculate the time window necessary to send the opening/closing command for the operating elements.

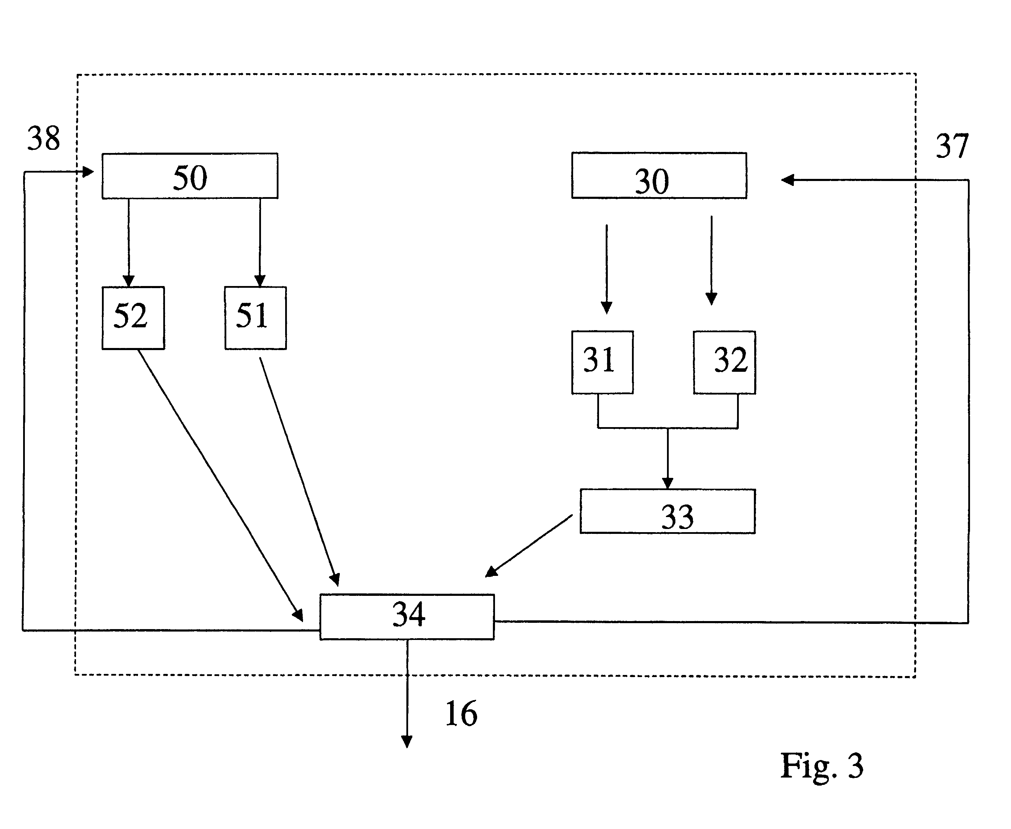

With reference to Figure 3, the steps forming the algorithm 11 (represented by the broken line) are shown.

The moments at which the current or voltage assumes a desired value are saved in a vector 30 with a dimension 2N, with N indicating a natural number other than zero.

At the same time a binary vector of 2N elements 50 is created, indicating the current or voltage transitions through the value desired.

Indicating the elements of the vector 30 as $T_1$... $T_{2N}$, the first N elements of the vector 30 are saved in a vector 31 of dimension N. The elements of the vector 31 are the elements of the vector 30 regarding the positions k ... k+N, with k=1.

The last N elements of the vector 30 are saved in vector 32 of dimension N.

In the same way, the first N elements of the vector 50 are saved in vector 51 of dimension N and the last N elements of vector 50 are saved in a vector 52 of N elements.

The vector 33 is then obtained, which has as its elements the difference between the elements of vector 31 and vector 32, which are located in the corresponding positions.

The elements of vector 33 are indicated as $D_1$ ... $D_N$.

If the elements of vector 33 are all the same as one another, which is to say if $D_1=D_2=....D_N$ and if the binary vectors 51 and 52 coincide (block 34), then the value of each element $D_j$ (j=1 ...N) constitutes the convergence value 16 of the algorithm 11 in Figure 2.

If the elements of the vector 33 are different from one another or the vectors 51 and 52 do not coincide, then the procedure is repeated (arrow 37). In this case, the vector 31 is formed by the elements of the vector 30 regarding the positions k ... k+N, with k=2.

The vector 51 is created again in the same way.

The iteration (indicated by arrow 37) is repeated until a convergence value 16 is reached, gradually increasing the value of k up to the maximum N.

It is in this way possible to obtain the period of a sequence of moments, which are in all circumstances distributed, of the transition through a desired value of the currents or voltages of one or more phases that contain up to N transitions per period.

If the algorithm does not converge after N iterations, the convergence value 16 is set to zero and one passes on to considering the algorithm 15 in Figure 2.

The procedure described above corresponds to the calculation of the absolute maximum autocorrelation value of the vector 30.

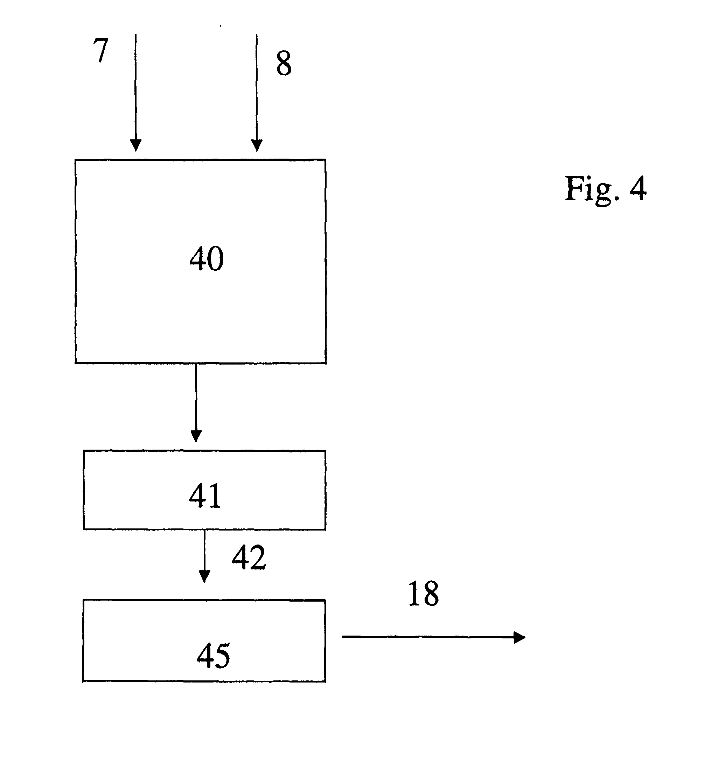

With reference to Figure 4, the steps forming the structure of algorithm 15 in Figure 2 are shown in diagrammatic form.

The last values of T1 and T2 (T2>T1) of the succession of moments measured, which can be obtained from signals 7 and 8, are taken into consideration. Step 40 involves the calculation of the time difference $\Delta t = T2-T1$. In step 41 the quantity $T' = T/2 - \Delta t$ is calculated, in which T is the nominal or measured period of the electrical network.

After this (arrow 42), the values $T'' = T + R_1T'$ and $T''' = T-R_2T'$ are calculated, in which $R_1$ and $R_2$ are constants < 1. Indicating the succession of future values as T3, T4 ...Tk we obtain, in step 45: T4 = T2 + T''' and T3= T1 +T'' and:

$$Tk = T2 + (k/2-1)* T + Rk\ T'\ \text{if k is an even number;}$$

and

$$Tk = T1 + ((k-1)/2)*T - Rk\ T'\ \text{if k is an odd number.}$$

The succession of moments Tk (arrow 18) is used by the processing unit 10 to calculate the time window required for sending the operating commands.

In practice it has been noted that the control and monitoring device as in the invention performs its set tasks.

It has in a particular been verified that it not only makes it possible to manage the normal operation of the network but fault situations or situations in which transients are present as well.

Indeed, the use of two algorithms, one of which presupposes normal operation of the network while the other presupposes operation in fault conditions, makes it possible to implement the predictive calculation of the succession of moments at which the current and voltages assume a desired value independently of the status of the network itself. This ensures that the control and monitoring device offers considerable flexibility and guarantees an optimal choice of the moments in which to perform the operation.

It should also be emphasized that these algorithms have been easy to implement, making it possible to obtain a control and monitoring device that is relatively easy to manufacture at low cost.

## Claims

1. Control and monitoring device for actuating means for the opening/closing of operating elements, featuring a mobile contact and a fixed contact, comprising measuring means for the current and voltage of one or more electrical phases and a processing unit equipped with means performing the following functions:

   - receiving in input from said measuring means signals indicating a succession of moments measured in which the voltage and/or current assumes a desired value;
   - iteratively executing a calculation of the period of succession of moments measured;
   - executing a predictive calculation of a succession of moments in w hich the current and/or voltage assumes said desired value;
   - calculating, following an operating command, the time window for the opening/closing of said electric operating elements;
   - sending a command to said actuator means on the basis of the time window determined and of the operating times of said electric operating elements;

   characterised by the fact that said processing unit:

   - executes a first algorithm that carries out the calculation of the period of said succession of moments measured and obtains, directly from said period, a predictive calculation of a succession of moments at which the current and/or voltage assumes said desired value, envisaging normal network operating conditions;
   - executes a second algorithm that carries out the predictive calculation of a succession of moments at which the current and/or voltage assumes said desired value, envisaging non-normal operation of the network, said second algorithm only being taken into consideration if said first algorithm supplies a value for the period that is below a given threshold.

2. Control and monitoring device as in claim 1 characterised by the fact that said first algorithm determines the period of said succession of moments measured calculating the absolute maximum of autocorrelation of a vector that has as its elements the moments at which the current or the voltage assumes said desired value.

3. Control and monitoring device as in one or more of the previous claims characterised by the fact that said second algorithm executes the predictive calculation of a succession of moments in which the voltage and the current assume a desired value, calculating the interval of time between said moments measured and basing itself on the measured or nominal period of the electrical network.

4. Control and monitoring device as in one or more of the previous claims characterised by the fact that said first algorithm comprises the following steps:

   i) creating a first vector of dimension 2N, having as its elements said moments measured, N being a natural number other than zero;
   ii) creating a first binary vector of dimension 2N, the elements of which indicate transitions, measured by said measuring means, of the current or voltage through said desired value;
   iii) dividing said first vector of dimension 2N into a second vector of dimension N in which the elements corresponding to the positions from 1 to N are saved and a third vector of dimension N in which the elements corresponding to the positions from N+1 to 2N are saved;
   iv) dividing said first binary vector of dimension 2N into a second binary vector of dimension N in which the elements corresponding to the positions from 1 to N are saved and a third binary vector of dimension N in which the elements corresponding to the positions from N+1 to 2N are saved;
   v) creating a difference vector, of dimension N, the elements of which are the difference between said second vector and said third vector of moments measured;

vi) verifying that the elements of said difference vector and the differences between said second binary vector and third binary vector are the same;

vii) if the verification in step vi) has a negative outcome, iteratively repeating steps iii), iv), v) and vi), executing a one position shift of the elements saved in said second vector of moments measured and in said second binary vector.

5. Control and monitoring device as in one or more of the previous claims **characterised by** the fact that said second algorithm comprises the following steps:

i) executing an evaluation of the time difference between the last two moments measured by said measuring means, in which the voltage and the current assume said desired value;
ii) calculating a translation interval basing itself on the nominal or measured period of the electrical network and on said time difference;
iii) calculating the succession of future moments basing itself on said moments measured, on the nominal or measured period of the electrical network and on said translation interval.

6. Control and monitoring device as in one or more of the previous claims **characterised by** the fact that said desired value is the current zero value.

7. Control and monitoring device as in one or more of claims 1 to 5 **characterised by** the fact that said desired value is the maximum voltage value.


**Patentansprüche**

1. Steuer- und Überwachungsvorrichtung für Betätigungseinrichtungen für das Öffnen/Schließen von Betätigungselementen, die einen beweglichen Kontakt und einen feststehenden Kontakt enthalten, aufweisend eine Messeinrichtung für den Strom und für die Spannung von einer oder mehreren elektrischen Phasen und eine Verarbeitungseinheit, die mit einer Einrichtung zum Durchführen der folgenden Funktionen versehen ist:

- Empfangen einer Eingabe von den Messeinrichtungssignalen unter Anzeige einer Aufeinanderfolge von gemessenen Zeitpunkten, in denen die Spannung und/oder der Strom einen gewünschten Wert einnimmt;
- iteratives Ausführen einer Berechnung der Periode der Aufeinanderfolge von gemessenen Zeitpunkten;

- Ausführen einer Vorhersageberechnung einer Aufeinanderfolge von Zeitpunkten, in denen der Strom und/oder die Spannung den gewünschten Wert einnimmt;
- Berechnen folgend auf einen Betätigungsbefehl das Zeitfenster für das Öffnen/Schließen der elektrischen Betätigungselemente;
- Senden eines Befehls zu der Betätigungseinrichtung auf Grundlage des ermittelten Zeitfensters und der Betriebszeiten der elektrischen Betätigungszeiten der elektrischen Betätigungselemente;

**dadurch gekennzeichnet, dass** die Verarbeitungseinheit:

- einen ersten Algorithmus ausführt, der die Berechnung der Periode der Aufeinanderfolge von gemessenen Zeitpunkten ausführt und direkt aus der Periode eine Vorhersageberechnung einer Aufeinanderfolge von Zeitpunkten gewinnt, in denen der Strom und/oder die Spannung den gewünschten Wert einnimmt, im Hinblick auf normale Netzwerkbetriebsbedingungen;
- einen zweiten Algorithmus ausführt, der die Vorhersageberechnung einer Aufeinanderfolge von Zeitpunkten ausführt, in denen der Strom und/oder die Spannung den gewünschten Wert einnimmt unter Berücksichtigung eines unnormalen Netzwerks, wobei der zweite Algorithmus ausschließlich berücksichtigt wird, wenn der erste Algorithmus einen Wert für die Periode zuführt, der unter einer gegebenen Schwelle liegt.

2. Steuer- und Überwachungsvorrichtung nach Anspruch 1,
**dadurch gekennzeichnet, dass** der erste Algorithmus die Periode der Aufeinanderfolge von gemessenen Zeitpunkten unter Berechnung des absoluten Maximums einer Autokorrelation eines Vektors ermittelt, dessen Elemente die Zeitpunkte bilden, in denen der Strom und/oder die Spannung den gewünschten Wert einnimmt.

3. Steuer- und Überwachungsvorrichtung nach einem oder mehreren der vorangehenden Ansprüche, **dadurch gekennzeichnet, dass** der zweite Algorithmus die Vorhersageberechnung einer Aufeinanderfolge von Zeitpunkten ausführt, in denen die Spannung und der Strom einen gewünschten Wert einnimmt unter Berechnung des Zeitintervalls zwischen den gemessenen Zeitpunkten und selbst basierend auf der gemessenen oder Nennperiode des elektrischen Netzwerks.

4. Steuer- und Überwachungsvorrichtung nach einem oder mehreren der vorangehenden Ansprüche, **dadurch gekennzeichnet, dass** der Algorithmus die folgenden Schritte umfasst:

i) Erzeugen eines ersten Vektors einer Dimension 2N, dessen Elemente die gemessenen Zeitpunkte sind, wobei N eine natürliche Zahl unterschiedlich von Null ist;

ii) Erzeugen eines ersten binären Vektors einer Dimension 2N, dessen Elemente die Übergänge bezeichnen, gemessen durch die Messeinrichtung des Stroms oder der Spannung durch den gewünschten Wert;

iii) Unterteilen des ersten Vektors der Dimension 2N in einen zweiten Vektor der Dimension N, in welchem die Elemente entsprechend den Positionen von 1 bis N gespeichert sind, und einen dritten Vektor der Dimension N, in dem die Elemente entsprechend den Positionen von N+1 bis 2N gespeichert sind;

iv) Unterteilen des ersten binären Vektors der Dimension 2N in einen zweiten binären Vektor der Dimension N, in dem die Elemente entsprechend den Positionen von 1 bis N gespeichert sind, und einen dritten binären Vektor der Dimension N, in dem die Elemente entsprechend den Positionen von N+1 bis 2N gespeichert sind;

v) Erzeugen eines Differenzwerts der Dimension N, dessen Elemente die Differenz zwischen dem zweiten Vektor und dem dritten Vektor der gemessenen Zeitpunkte sind;

vi) Verifizieren, dass die Elemente des Differenzvektors und die Differenzen zwischen dem zweiten binären Vektor und dem dritten binären Vektor identisch sind;

vii) wenn die Verifikation in Schritt vi) ein negatives Ergebnis hat, iteratives Wiederholen der Schritte iii), iv), v) und vi) unter Ausführung einer Positionsverschiebung der Elemente, die in dem zweiten Vektor der gemessenen Zeitpunkte gespeichert sind und in dem zweiten binären Vektor.

**5.** Steuer- und Überwachungsvorrichtung nach einem oder mehreren der vorangehenden Ansprüche, **dadurch gekennzeichnet, dass** der zweite Algorithmus die folgenden Schritte umfasst:

i) Ausführen einer Evaluation der Zeitdifferenz zwischen den letzten zwei Zeitpunkten, die durch die Messeinrichtung gemessen werden, in denen die Spannung und der Strom den gewünschten Wert einnehmen;

ii) Berechnen eines Translationsintervalls, das sich auf die Nenn- oder gemessenen Periode des elektrischen Netzwerks und auf der Zeitdifferenz bezieht;

iii) Berechnen der Aufeinanderfolge zukünftiger Zeitpunkte, das sich auf den gemessenen Zeitmomenten auf der Nenn- bzw. gemessenen Periode des elektrischen Netzwerks und auf dem Translationsintervall bezieht.

**6.** Steuer- und Überwachungsvorrichtung nach einem oder mehreren der vorangehenden Ansprüche, **dadurch gekennzeichnet, dass** der gewünschte Wert der Stromwert Null ist.

**7.** Steuer- und Überwachungsvorrichtung nach einem oder mehreren der Ansprüche 1 bis 5, **dadurch gekennzeichnet, dass** der gewünschte Wert der maximale Spannungswert ist.

## Revendications

**1.** Dispositif de contrôle et de surveillance pour actionner des moyens pour fermer ou ouvrir des éléments d'actionnement, comportant un contact mobile et un contact fixe, comprenant des moyens de mesure du courant et de la tension d'une ou de plusieurs phases électriques et une unité de traitement équipée de moyens qui permettent d'exécuter les fonctions suivantes consistant à :

- recevoir en entrée à partir desdits moyens de mesure des signaux qui indiquent une succession d'instants mesurés dans lesquels la tension et / ou le courant prennent une valeur souhaitée ;
- exécuter de manière itérative un calcul de la période de succession des instants mesurés ;
- exécuter un calcul prédictif d'une succession d'instants où le courant et / ou la tension prennent ladite valeur souhaitée ;
- calculer, suite à un ordre de commande de fonctionnement, la fenêtre temporelle pour l'ouverture ou la fermeture desdits éléments électriques d'actionnement ;
- envoyer un ordre de commande auxdits moyens d'actionnement sur la base de la fenêtre temporelle déterminée et des instants de fonctionnement desdits éléments électriques d'actionnement ;

**caractérisé par le fait que** ladite unité de traitement :

- exécute un premier algorithme qui réalise le calcul de la période de ladite succession d'instants mesurés et obtient, directement à partir de ladite période, un calcul prédictif d'une succession d'instants, où le courant et / ou la tension prennent ladite valeur souhaitée, en envisageant des conditions normales de fonctionnement du réseau ;

- exécute un second algorithme qui réalise le calcul prédictif d'une succession d'instants, où le courant et / ou la tension prennent ladite valeur souhaitée, en envisageant un fonctionnement anormal du réseau, ledit second algorithme étant seulement pris en compte si ledit premier algorithme fournit une valeur pour la période qui se situe au-dessous d'un seuil donné.

2. Dispositif de contrôle et de surveillance selon la revendication 1, **caractérisé par le fait que** ledit premier algorithme détermine la période de ladite succession d'instants mesurés en calculant le maximum absolu d'auto-corrélation d'un vecteur dont les éléments sont les instants où le courant ou la tension prend ladite valeur souhaitée.

3. Dispositif de contrôle et de surveillance selon l'une quelconque des revendications précédentes, **caractérisé par le fait que** ledit second algorithme exécute le calcul prédictif d'une succession d'instants où la tension et le courant prennent une valeur souhaitée, en calculant l'intervalle de temps entre lesdits instants mesurés et en se basant sur la période mesurée ou nominale du réseau électrique.

4. Dispositif de contrôle et de surveillance selon l'une ou plusieurs des revendications précédentes, **caractérisé par le fait que** ledit premier algorithme comprend les étapes suivantes consistant à :

   i) créer un premier vecteur de dimension 2N, dont les éléments sont lesdits instants mesurés, N étant un nombre entier différent de zéro ;
   ii) créer un premier vecteur binaire de dimension 2N, dont les éléments indiquent les transitions, mesurées par lesdits moyens de mesure, du courant ou de la tension de part et d'autre de ladite valeur souhaitée ;
   iii) scinder ledit premier vecteur de dimension 2N en un deuxième vecteur de dimension N dans lequel les éléments correspondant aux positions allant de 1 à N sont sauvegardés et en un troisième vecteur de dimension N dans lequel les éléments correspondant aux positions allant de N + 1 à 2N sont sauvegardés ;
   iv) scinder ledit premier vecteur binaire de dimension 2N en un deuxième vecteur binaire de dimension N dans lequel les éléments correspondant aux positions allant de 1 à N sont sauvegardés et en un troisième vecteur binaire de dimension N dans lequel les éléments correspondant aux positions allant de N + 1 à 2N sont sauvegardés ;
   v) créer un vecteur différence, de dimension N, dont les éléments sont la différence entre ledit deuxième vecteur et ledit troisième vecteur d'instants mesurés ;
   vi) vérifier que les éléments dudit vecteur différence et les différences entre ledit deuxième vecteur binaire et ledit troisième vecteur binaire sont identiques ;
   vii) si la vérification effectuée à l'étape vi) donne un résultat négatif, répéter de manière itérative les étapes iii), iv), v) et vi), exécuter un décalage d'une position des éléments sauvegardés dans ledit deuxième vecteur d'instants mesurés et dans ledit deuxième vecteur binaire.

5. Dispositif de contrôle et de surveillance selon l'une ou plusieurs des revendications précédentes, **caractérisé par le fait que** ledit second algorithme comprend les étapes suivantes consistant à :

   i) effectuer une évaluation de la différence de temps entre les deux derniers instants mesurés par lesdits moyens de mesure, où la tension et le courant prennent ladite valeur souhaitée ;
   ii) calculer un intervalle de translation se basant sur la période nominale ou mesurée du réseau électrique et sur ladite différence de temps ;
   iii) calculer la succession des instants futurs en se basant sur lesdits instants mesurés, sur la période nominale ou mesurée du réseau électrique et sur ledit intervalle de translation.

6. Dispositif de contrôle et de surveillance selon l'une quelconque des revendications précédentes, **caractérisé par le fait que** ladite valeur souhaitée est la valeur zéro du courant.

7. Dispositif de contrôle et de surveillance selon l'une quelconque des revendications précédentes, **caractérisé par le fait que** ladite valeur souhaitée est la valeur de tension maximum.

Fig. 1

Fig. 2

38

37

50

30

52 51

31 32

33

34

16

EP 1 006 538 B1

Fig. 3

Fig. 4

EP 1 006 538 B1